**Europäisches Patentamt**

**European Patent Office**

**Office européen des brevets**

(19)

(11) Veröffentlichungsnummer: **0 190 649**
A2

# EUROPÄISCHE PATENTANMELDUNG

(12)

(21) Anmeldenummer: 86101123.7

(22) Anmeldetag: 29.01.86

(51) Int. Cl.⁴: **B 01 D 53/34**
**B 01 D 53/14**

(30) Priorität: 02.02.85 DE 3503500

(43) Veröffentlichungstag der Anmeldung:
13.08.86 Patentblatt 86/33

(84) Benannte Vertragsstaaten:
AT BE CH DE FR GB IT LI NL SE

(71) Anmelder: Merck Patent Gesellschaft mit beschränkter Haftung
Frankfurter Strasse 250
D-6100 Darmstadt(DE)

(72) Erfinder: Fruhstorfer, Wolfgang, Dr.
Heideweg 4a
D-6109 Mühltal-Traisa(DE)

(72) Erfinder: Eisele, Wilfried
Kleiststrasse 22
D-6100 Darmstadt-Arheilgen(DE)

(54) Verfahren zur Abluftreinigung.

(57) Die Anmeldung betrifft ein Verfahren zur Abtrennung von flüchtigen Schadstoffen aus Abluft durch Gegenstromwäsche mit einer Waschflüssigkeit im geschlossenen Kreislauf gefahren wird und bei erhöhter Temperatur und vermindertem Druck von den absorbierten Schadstoffen befreit wird, dadurch gekennzeichnet, daß die bei der Vakuum-Desorption der Waschflüssigkeit freigesetzten Schadstoffe gasförmig durch die Vakuumpumpen geleitet und anschließend unter Normaldruck kondensiert werden.

EP 0 190 649 A2

Croydon Printing Company Ltd.

0190649

Merck Patent Gesellschaft
mit beschränkter Haftung

6100  D a r m s t a d t


Verfahren zur Abluftreinigung

Die Erfindung betrifft ein Verfahren zur Abtrennung von flüchtigen Schadstoffen aus Abluft durch Gegenstromwäsche mit einer Waschflüssigkeit, wobei die Waschflüssigkeit im geschlossenen Kreislauf gefahren wird und bei erhöhter Temperatur und vermindertem Druck von den absorbierten Schadstoffen befreit wird.

Aus der DE-PS 24 51 157 ist ein Verfahren zur Reinigung von Abluft, die beim Betrieb von Walzgerüsten in großen Mengen anfällt und gas- und/oder tröpfchenförmige Walz- und/oder Kühlölreste aufweist, bekannt, bei dem Abluft im Gegenstrom mittels eines im geschlossenen Kreislauf geführten Waschöls gewaschen wird und wobei in einer ersten Stufe dem Waschöl unter vermindertem Druck bei etwa 1 - 15 Torr im wesentlichen aufgenommenes Wasser und aufgenommene Gase entzogen werden, während in einer zweiten Stufe bei einem Druck von weniger als 5 Torr aufgenommenes Walz- und/oder Kühlöl abdestilliert wird.

Bei diesem Verfahren werden die in der ersten Stufe aus dem Waschöl entfernten Gase und Dämpfe niedrigsiedender Flüssigkeiten als Abluft an die Umgebung abgegeben. Eine Reingung der Abluft von diesen Stoffen ist nicht vorgesehen und ist auch mit der beschriebenen Anordnung nicht möglich. Dies ist im Falle von umweltschädlichen Stoffen nicht tolerierbar.

PAT LOG 11/4 271184

Für diesen Fall wurden daher in der Regel Kohleadsorptionsanlagen eingesetzt, die nach Sättigung durch Ausheizen regeneriert wurden. Diese Anlagen haben jedoch nur eine geringe Kapazität, können nur diskontuierlich betrieben werden und bei hoher Schadstoffkonzentration kann es zur Erhitzung des Kohlebetts kommen bis zur Selbstentzündung. Ein weiterer Nachteil von Kohleadsorptionsanlagen besteht darin, daß eine Desorption durch schadstoffarme Abluft schon bei geringer Beladung mit Schadstoffen einsetzt und die Anlagen daher nur bei Betriebszuständen mit Schadstoffentwicklung eingeschaltet werden dürfen.

Es bestand also die Aufgabe, ein Verfahren zu finden, mit dem in kontinuierlicher Fahrweise auch niedrigsiedende Schadstoffe möglichst vollständig aus der Abluft entfernt werden können.

Diese Aufgabe wurde durch die vorliegende Erfindung gelöst.

Gegenstand der Erfindung ist daher ein Verfahren zur Abtrennung von flüchtigen Schadstoffen aus Abluft durch Gegenstromwäsche mit einer Waschflüssigkeit, wobei die Waschflüssigkeit im geschlossenen Kreislauf gefahren wird und bei erhöhter Temperatur und vermindertem Druck von den absorbierten Schadstoffen befreit wird, das dadurch gekennzeichnet ist, daß die bei der Vakuum-Desorption der Waschflüssigkeit freigesetzten Schadstoffe gasförmig durch die Vakuumpumpen geleitet und anschließend unter Normaldruck kondensiert werden.

PAT LOG 11/4 271184

Da die von der Waschflüssigkeit desorbierten Schadstoffe unter Normaldruck kondensiert werden, ist es trotz einer überraschend einfachen Bauweise der Anlage möglich, die Schadstoffe nahezu vollständig zu kondensieren und aus dem Kreislauf zu entfernen. Durch die vorzugsweise durchgeführte Rückführung der verbleibenden Restgase in den Abluftwäscher wird der Reinigungseffekt noch verstärkt.

Ein weiterer vorteilhafter Aspekt der vorliegenden Erfindung liegt in der Bereitstellung von speziellen Waschflüssigkeiten, die mit gutem Erfolg verwendet werden können. Nach dem Stand der Technik war es üblich, diese Art von Gaswäsche als sogenannte "Weißölwäsche" durchzuführen, das heißt als Absorptionsflüssigkeit wurde ein Paraffinöl verwendet. Diese Öle haben jedoch mehrere Nachteile. Zum einen ist ihr Absorptionsvermögen insbesondere für polare Schadstoffe nicht besonders hoch, so daß die Anlagen nur eine stark begrenzte Kapazität aufweisen. Zum anderen sind diese Oele bereits bei Raumtemperatur so viskos, daß sich Schwierigkeiten durch schlechten Wärmeaustausch und schlechte Benetzung der Absorptionskolonne ergeben. Darüberhinaus sind diese Oele oxidationsempfindlich und verharzen relativ rasch.

Es wurde nun gefunden, daß durch die Verwendung von bei Raumtemperatur niedrigviskosen Esterölen die Kapazität der Anlage gesteigert werden kann. Bevorzugt werden daher als Waschflüssigkeit Ester von Dicarbonsäuren mit Alkoholen mittlerer Kettenlänge. Gut bewährt haben sich dabei die Ester der Malein-, Bernstein-, Adipin oder Phthalsäure mit 2-Ethylhexanol-1 oder technischem Iso-Decylalkohol, insbesondere die Diisooctylester der Bernstein- und der Adipinsäure, die eine sehr niedrige Viskosität und eine überraschend lange Standzeit im Dauerbetrieb besitzen.

Ein besonderer Vorteil der nachfolgend beschriebenen Absorptionsanlage ist daher auch darin zu sehen, daß sie im Dauerbetrieb ständig verfügbar und nicht wie eine Kohleadsorptionsanlage zeitweilig abgeschaltet werden muß.

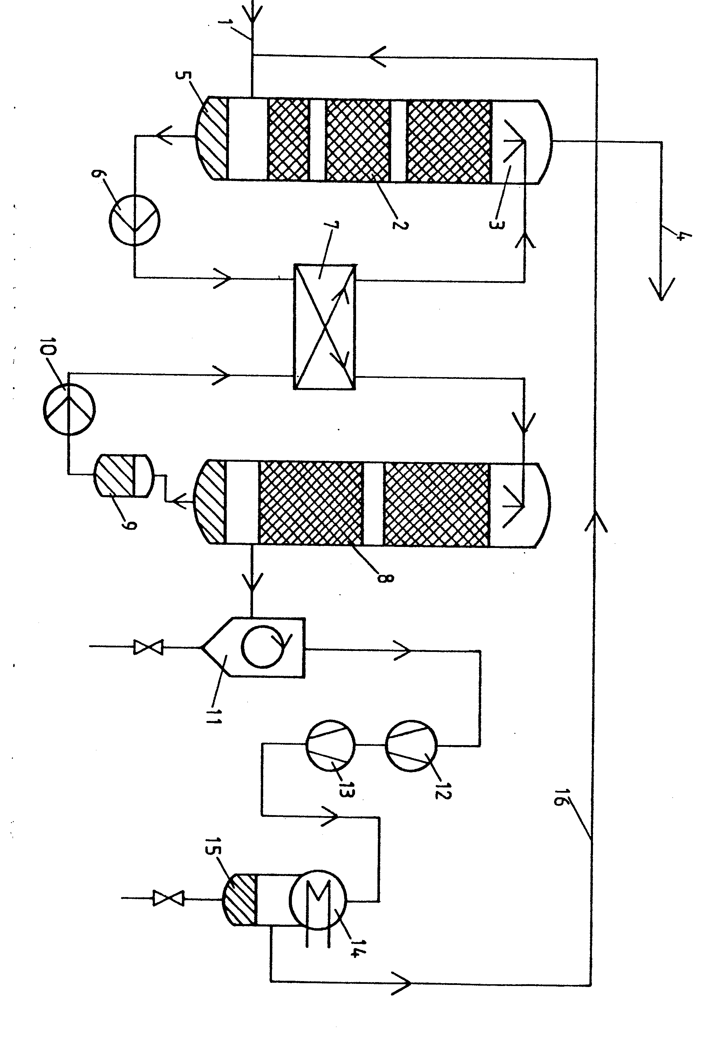

In der beigefügten Zeichnung ist schematisch der Aufbau einer Anlage gezeigt, die zur Durchführung des erfindungsgemäßen Verfahrens geeignet ist. Mit 1 ist darin die Zufuhr der Schadstoff-beladenen Abluft bezeichnet, die im Abluftwäscher (2) im Gegenstrom durch die am Kopf des Wäschers (3) zugeführte Waschflüssigkeit gereinigt und durch die Reingasleitung (4) austritt. Die mit den absorbierten Schadstoffen beladene Waschflüssigkeit wird am Boden (5) des Wäschers abgeführt und mit einer Pumpe (6) durch den Wärmetauscher (7) zum Kopf der Desorptionskolonne (8) befördert.

Während die Absorption der Schadstoffe im Abluftwäscher (2) bei niedrigen Temperaturen, vorzugsweise bei Raumtemperatur, erfolgt, wird die Desorption bei einer Temperatur zwischen Raumtemperatur und etwa 200 °C durchgeführt. Vorzugsweise verwendet man Temperaturen von etwa 100 - 140 °C. Dazu wird die Waschflüssigkeit im Wärmetauscher (7) aufgeheizt; darüberhinaus kann auch die Desorptionskolonne (8) beheizbar sein. In der Desorptionskolonne (8) werden der Waschflüssigkeit bei der genannten Temperatur und einem Druck von etwa 0,1 - 100 mbar die Schadstoffe in Gasform entzogen.

Die gereinigte Waschflüssigkeit wird am Boden der Kolonne (8) abgezogen und über den Vorratsbehälter (9) mit der Pumpe (10) durch den Wärmetauscher (7) erneut in den Abluftwäscher (2) befördert. Es besteht damit ein geschlossener, kontinuierlich arbeitender Kreislauf für die Waschflüssigkeit.

Die in der Desorptionskolonne (8) freigesetzten Gase und Dämpfe werden über einen Abscheider (11), worin mitgerissene Waschöltröpfchen abgeschieden werden, durch die Vakuumpumpen (12 und 13) zu einem Kondensator (14) geführt, wo die Schadstoffdämpfe kondensiert und in der Kondensatvorlage (15) gesammelt werden. Da die Kondensation der Schadstoffdämpfe bei Normaldruck erfolgt, brauchen dazu keine extrem niedrigen Temperaturen angewandt werden. In der Regel wird daher die Kondensation bei Temperaturen zwischen +20 und -20 °C durchgeführt. Nicht kondensierte Gasanteile werden über die Leitung (16) zur Abluftzufuhr (1) zurückgeführt.

Obwohl bei der erfindungsgemäßen Kondensation bei Normaldruck die Schadstoffe sehr weitgehend kondensiert werden, ist durch die Rückführung eine zusätzliche Sicherheit gegeben. Da sowohl bezüglich der Waschflüssigkeit als auch des Gasstroms ein geschlossener Kreislauf existiert, wird allein über die Reingasleitung (4) gereinigte Abluft an die Umgebung abgegeben. Falls die so erzielte sehr geringe Schadstoffkonzentration in Extremfällen noch zu hoch sein sollte, kann ohne weiteres eine zweite Anlage der gleichen Art nachgeschaltet werden.

Obwohl in der Zeichnung nur eine schematische Darstellung gegeben ist, kann der Fachmann anhand der vorliegenden Angaben ohne weiteres eine entsprechende Anlage unter Ergänzung der hier nicht gezeigten Teile, wie z.B. Heiz- und Kühleinrichtungen, Ventile und Regeleinrichtungen für die Prozessteuerung, errichten. Die dazu verwendeten Bauteile sind an sich bekannt.

Als Abluftwäscher (2) und als Desorptionskolonne (8) werden Kolonnen mit einem guten Stoffaustausch zwischen Gas- und Flüssigphase, wie z.B. Füllkörperkolonnen, Siebbodenkolonnen, Glockenbodenkolonnen mit Querstromführung und ähnliches, eingesetzt, wobei Füllkörperkolonnen in der Regel bevorzugt werden. Als Pumpe (13) hat sich insbesondere eine ein- oder mehrstufige, frischölgeschmierte Drehschieberpumpe bewährt, die gegebenenfalls noch durch eine Wälzkolbenpumpe (12) auf der Saugseite ergänzt werden kann.

Die Dimension der Anlage ist selbstverständlich in erster Linie von der erwarteten Leistung abhängig und kann dieser beliebig angepaßt werden. Andererseits kann auch durch Erhöhung der Berieselungsdichte der Waschflüssigkeit die Leistung, in allerdings beschränktem Umfang, gesteigert werden. Eine ausschlaggebende Rolle für die Qualität der Abluftreinigung spielt darüberhinaus jedoch die Absorptionskapazität der Waschflüssigkeit. Sowohl in dieser Beziehung als auch im Hinblick auf die für den Dauerbetrieb wichtige Temperaturstabilität, sind die bevorzugten Esteröle besonders vorteilhaft.

Durch die vorliegende Erfindung steht daher ein wertvolles neues Verfahren zur Abluftreinigung zur Verfügung.

Merck Patent Gesellschaft
mit beschränkter Haftung

6100  D a r m s t a d t


Patentansprüche


1.  Verfahren zur Abtrennung von flüchtigen Schadstoffen aus Abluft durch Gegenstromwäsche mit einer Waschflüssigkeit, wobei die Waschflüssigkeit im geschlossenen Kreislauf gefahren wird und bei erhöhter Temperatur und vermindertem Druck von den absorbierten Schadstoffen befreit wird, dadurch gekennzeichnet, daß die bei der Vakuum-Desorption der Waschflüssigkeit freigesetzten Schadstoffe gasförmig durch die Vakuumpumpen geleitet und anschließend unter Normaldruck kondensiert werden.


2.  Verfahren nach Anspruch 1, dadurch gekennzeichnet, daß die bei der Kondensation der Schadstoffe verbleibenden Restgase in die Gegenstromwäsche rückgeführt werden.


3.  Verfahren nach Anspruch 1 oder 2, dadurch gekennzeichnet, daß als Waschflüssigkeit ein bei Raumtemperatur niedrig viskoses Esteröl verwendet wird.


4.  Verfahren nach Anspruch 3, dadurch gekennzeichnet, daß als Waschflüssigkeit Ester von Dicarbonsäuren mit Alkoholen mittlerer Kettenlänge verwendet werden.

**0190649**

5. Verfahren nach Anspruch 4, dadurch gekennzeichnet, daß Ester der Maleinsäure, Bernsteinsäure, Adipinsäure oder Phthalsäure mit 2-Ethylhexanol-1 oder technischem Iso-Decylalkohol verwendet werden.

6. Verfahren nach einem der Ansprüche 1 - 5, dadurch gekennzeichnet, daß die Desorption der Waschflüssigkeit bei einer Temperatur zwischen Raumtemperatur und 200 °C und einem Druck zwischen 0,1 und 100 mbar erfolgt.

0190649